# EUROPÄISCHE PATENTSCHRIFT

(11) **EP 2 012 047 B1**
(45) Veröffentlichungstag und Bekanntmachung des Hinweises auf die Patenterteilung: **12.08.2015**
(21) Anmeldenummer: 08011571.0
(22) Anmeldetag: 26.06.2008
(51) Int. Cl.: F16H 19/00, B60J 7/185, E05B 81/24

(54) **Verschlusssystem für Fahrzeuge, vorzugsweise für Kraftfahrzeuge**
Lock system for vehicles, especially for motor vehicles
Système de fermeture pour véhicules, de préférence pour véhicules automobiles

(30) Priorität: 03.07.2007 DE 102007030851
(43) Veröffentlichungstag der Anmeldung: 07.01.2009
(73) Patentinhaber: AUDI AG, 85045 Ingolstadt (DE)
(72) Erfinder: Schumacher, Thorsten, Dipl.-Ing. (FH), 25495 Kummerfeld (DE)
(74) Vertreter: Engelhardt, Harald

(56) Entgegenhaltungen:
- EP-A2- 1 627 758
- EP-A2- 1 736 335

## Beschreibung

Die Erfindung betrifft ein Verschlusssystem für Fahrzeuge, vorzugsweise für Kraftfahrzeuge, nach dem Oberbegriff des Anspruches 1.

Es sind Verschlusssysteme mit hydraulischen oder elektrischen Getrieben bekannt. Die dabei zur Anwendung kommenden Getriebe verfügen beispielsweise über Lenkeranordnungen, die außer der Bewegungsübertragung zu dienen auch Geschwindigkeit und Weg übersetzen und teilweise die Getriebe verriegeln können. Die Übertragung auf das eigentliche Verriegelungselement erfolgt mittels Übertragungsglieder wie Rohre, Stangen, Bowdenzüge und/oder drucksteife Antriebskabel. Letztere findet man häufig in Schiebedachbetätigungen, wobei diese mittels eines Antriebsritzels eine Rotationsbewegung in eine translatorische Bewegung umwandeln.

Aus der EP 1627758 A2 ist ein Verschlusssystem bekannt, bei dem durch einen in einem Verschlussgehäuse aufgenommenen elektrischen Motor und einem Getriebe über eine Antriebswelle ein Ritzel angetrieben wird und wenigstens ein mit einer Verzahnung versehener Schieber, der als Flachschieber ausgebildet ist, über das Ritzel in Längsrichtung des Schiebers verschoben wird.

Aus der DE 38 09 949 A1 ist eine Antriebsvorrichtung für ein bewegbares Teil an einer Fahrzeugkarosserie bekannt, bei der mindestens ein drucksteifes axial bewegbares Antriebskabel über ein Antriebsritzel in axialer Richtung verschoben wird. Die Rotationsbewegung des Antriebsritzels wird über eine Verzahnung auf eine das Antriebskabel umgebende Wendel in eine axiale Bewegungsrichtung übertragen. Das Antriebskabel wird zumindest bereichsweise durch rohrförmige Kabelführungen geleitet. Im Bereich des Antriebsritzels ist ein zusätzliches Abstützelement vorgesehen, das die vom Antriebsritzel auf das Antriebskabel zu übertragende Bewegung abstützt. Das Abstützelement ist U förmig ausgeformt, wobei im Bereich der Schenkel des Abstützelements besondere Anlaufwinkel und Flächen vorgesehen sind. Mit diesen Flächen soll ein sicherer und geräuscharmer Betrieb erreicht werden. Die gesamte Einheit ist zusätzlich in einem separaten Gehäuse untergbracht.

Die DE 38 32 681 C1 zeigt eine Verschlusseinheit, die zur Betätigung eines Schiebe und/oder Hebedachs dient. Über eine Antriebseinrichtung, vorzugsweise ein Antriebsritzel, wird mittels eines drucksteifen in Führungsrohren geführten Antriebskabels das Schiebe-/Hebedach betätigt. Hierzu ist das Antriebskabel mit seinen Führungsrohren sowie das Antriebsritzel von einer Halteeinrichtung/Gehäuse aus Kunststoff umspritzt. Dieses Umspritzungsteil ist gleichzeitig als Aufnahme für das Antriebsritzel ausgelegt.

Auch hier wird aus einer Rotation eine translatorische Bewegung erzeugt. Das Antriebsritzel kämmt mit der Wendel des Antriebskabels, wobei im Eingriffsbereich das Antriebskabel durch die Führungsrohre abgestützt werden muss und das Umspritzungsteil das Gehäuse bildet.

Der Erfindung liegt die Aufgabe zugrunde, ein kostengünstiges Verschlusssystem zu schaffen, das eine besonders flache, und leicht zu montierende Einheit darstellt, wobei sich die Betätigungskräfte des Verschlusssystems zueinander im Gleichgewicht befinden.

Diese Aufgabe wird erfindungsgemäß durch die kennzeichnenden Merkmalen des Patentanspruchs 1 gelöst.

Bei dem erfindungsgemäßen Verschlusssystem wird besonderen Wert auf eine sehr flache Bauweise bei maximaler Kraftübertragung gelegt. Zur Übertragung großer Stellkräfte ist eine spielarme, solide Abstützung der Stellglieder notwendig, die bei der Erfindung durch ein umgreifendes Schiebersystem erreicht wird.
Hierbei sind zwei U-förmige Flachschieber so angeordnet, dass je ein Schenkel eines der U-förmigen Flachschieber mit einer Innenseite auf einer Außenseite eines anderen Schenkels des anderen Flachschiebers gleitend geführt wird. Die jeweiligen inneren Schenkel beider Flachschieber weisen auf ihren Innenseiten der Schenkel je eine Zahnstange auf, die gemeinsam mit einem mittig angeordneten Ritzel kämmen. Rotiert das Ritzel, werden entsprechend der Drehrichtung die Flachschieber translatorisch auseinander bzw. ineinander verschoben. Durch diese ineinander greifenden Schenkel der U-förmigen Flachschieber und das mittig angeordnete, sich im ständigen Zahneingriff mit den Zahnstangen befindende Ritzel entsteht ein in sich geschlossenes, gegenseitig Kräfte abstützendes, Schiebersystem.
Das System ist in einem Verschlussgehäuse aufgenommen, wobei alle in diesem Verschlussgehäuse angeordneten Führungen im Wesentlichen nur ein sicheres Führen und Verschieben der Flachschieber gewährleisten und keine größeren Kräfte über die Führungen abgestützt werden müssen.

Die Verschlusseinheit wird vorzugsweise in einer Dacheinheit eingebaut. Zwischen der Verschlusseinheit und den Verschlusselementen, beispielsweise Verschlusshaken, ist zur Übertragung der Schließbewegung ein Übertragungsglied, beispielsweise ein Gestänge vorgesehen. Selbstverständlich eignet sich das Verschlusssystem auch zur Montage in anderen Bereichen des Fahrzeugs, wobei außer Gestänge zur Übertragung auch Bowdenzüge eingesetzt werden können.

Durch die Längen der U-förmigen Schenkel lassen sich Anschläge innerhalb der Verschlusseinheit realisieren. Hierbei stoßen bei zusammengefahrenen Flachschiebern die Enden einzelner Schenkel beispielsweise an einer Innenwand des Verschlussgehäuses an. Weiter können die Schenkelenden durch den Steg der U-förmigen Schenkel an einer weiteren translatorischen Bewegung gehindert werden. Auch ist es möglich, dass die Enden der Schenkel mit den Zahnstangen bei Erreichen des Ritzels durch einen fehlenden Auslauf der Zahnstangen an einem weiteren Verschieben gehindert werden. Diese Enden können mit Fortsätzen versehen sein, die als Anschläge auf die jeweilige gegenüberliegende Zahnstange gerichtet sind. In diesem Fall stoßen diese Fortsätze bei entsprechender Verschiebung der Flachschieber auf das Ritzel, wodurch eine weitere Verschiebung der Flachschieber nicht mehr erfolgen kann.

Eine zusätzliche Variante stellt die Verwendung eines nur einseitig offenen Verschlussgehäuses dar, aus dem nur an einer Seite ein Flachschieber hervortritt. Der zweite Flachschieber ist in diesem Fall ohne einen Halter zur Befestigung von Übertragungs- oder Stellgliedern ausgelegt. Er verschiebt sich in gleicher Weise wie bei dem zuvor beschriebenen System, wird jedoch ausschließlich innerhalb des Verschlussgehäuses verschoben und geführt.

Da es sich bei der Verschlusseinheit um ein gegenseitig Kräfte abstützendes (geschlossenes) Schiebersystem handelt und nur Kräfte in Schieberlängsrichtung übertragen werden, können das Verschlussgehäuse und der Gehäusedeckel aus Kunststoff gefertigt sein. Die innerhalb des Verschlussgehäuses angeordneten seitlichen Führungen können klein ausgelegt werden, da nur geringe Kräfte abgestützt werden müssen. Die seitlichen Führungen sind allenfalls zur Einleitung einer Vorspannung auf die Flachschieber vorgesehen.

Weitere Merkmale der Erfindung ergeben sich aus den weiteren Ansprüchen, der Beschreibung und den Zeichnungen.

Die Erfindung wird anhand einer in den Zeichnungen dargestellten Ausführungsform näher erläutert. Es zeigt:
- Fig. 1: eine Explosionszeichnung des Verschlusssystems,
- Fig. 2: einen Querschnitt durch die Antriebswelle und durch das Ritzel,
- Fig. 3: eine Ansicht auf die Flachschieber in einer ausgefahrenen Flachschieberposition.

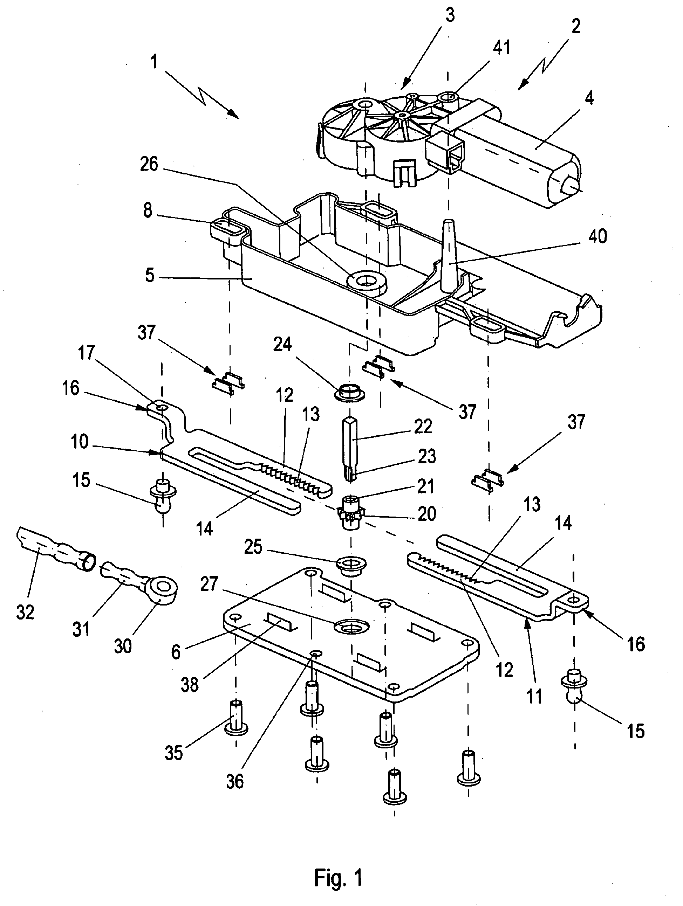

In Figur 1 ist das Verschlusssystem als Explosionsdarstellung mit allen wesentlichen Bauteilen dargestellt. Eine Antriebseinheit 2, gebildet aus einem el. Motor 4 und einem Getriebe 3, vorzugsweise einem Winkelgetriebe ist in einem Verschlussgehäuse 5 eingebaut. Zur genauen Lagepositionierung wird die Antriebseinheit 2 über eine Aufnahmebohrung und einen an der Innenseite des Verschlussgehäuses 5 vorgesehenen Fixierstift zueinander positioniert, wobei die Antriebseinheit 2 mit der Aufnahmebohrung auf den Fixierstift 40 geschoben wird.

Das den Verschluss 1 antreibende Getriebe 3 ist im montierten Zustand fluchtend über einer Öffnung des Verschlussgehäuses 5 positioniert. Diese Öffnung weist auf der dem Getriebe 3 gegenüberliegenden Seite des Verschlussgehäuses 5 eine obere Lageraufnahme 26 auf, in die eine obere Lagerbuchse 24 eingebracht ist.
Das Verschlussgehäuse 5 wird mittels des Gehäusedeckels 6 und Schrauben 35 fest miteinander verschlossen. Fluchtend zur oberen Lagerbuchse 24 ist im Gehäusedeckel 6, ausgehend vom Verschlussgehäuse 5, eine untere Lagerbuchse 25 in eine untere Lageraufnahme 27 eingebracht.

Im montierten Zustand ist in beiden Lagerbuchsen 24, 25 beiderseitig die axiale Verlängerung eines Ritzels 20 aufgenommen und gelagert. Hierzu kann es sinnvoll sein, wenn die beiden Lagerbuchsen 24, 25 aus einem Gleitlagermaterial wie beispielsweise Messing oder auch aus einem Gleitlager geeigneten Kunststoff gefertigt sind. In axialer Richtung wird das Ritzel 20 über seine seitlichen Zahnflächen auf den Flanschflächen der Lagerbuchen 24, 25 geführt.

Auf der der Antriebseinheit 2 zugewandten Seite weist das Ritzel 20 in seiner axialen Verlängerung einen Innensechskant 21 auf, in dem der Außensechskant 23 einer Antriebswelle 22 aufgenommen ist. Diese Antriebswelle 22 verbindet das Ritzel 20 mit dem Abtriebsrad des Getriebes, wobei sich der Innensechskant 21 über die gesamte axiale Abmessung des Ritzels 20 erstrecken kann. Die Verzahnung des Ritzels 20 kämmt mit zwei parallel verlaufenden Zahnstangen 13 zweier U-förmiger Flachschieber 10, 11, wobei die Zahnstangen 13 jeweils an der Innenseite eines der U-förmigen Schenkel 12, 14 angeordnet sind. Die Zahnstangen 13 tragenden Schenkel 12 sind gegenüberliegend angeordnet, wobei sich das Ritzel 20 in der Mitte zwischen den Schenkeln 12 befindet. Die Zahnstangen 13 sowie die Schenkel 14 stützen sich gegenseitig so ab, dass quer zu den Schenkeln 12, 14 auftretende Kräfte kompensiert werden.

An den Verbindungsstegen der beiden U-förmigen Schenkel 12, 14 sind an jedem Flachschieber 10, 11 gekröpfte Halter 16 in Form eines rechten Winkels angebracht, wobei die Kröpfung in Richtung der Antriebseinheit 2 ausgebildet ist. Diese gekröpften Halter 16 sind außermittig der Längserstreckung der U-förmigen Flachschieber 10, 11 an deren Stegen positioniert und weisen jeder eine Bohrung 17 zur Aufnahme eines zylindrischen Flansches eines Kugelgelenkbolzens 15 auf.

Auf dem Kugelgelenkbolzen 15 ist ein Kugelgelenkkopf 30 angeordnet, der mittels einer Sicherung zusammen mit dem Kugelgelenkbolzen 15 in seiner Position gehalten wird. Der Kugelgelenkkopf 30 weist an einer Seite seines Außendurchmessers eine den Außendurchmesser reduzierende Verjüngung auf. Zur Übertragung der Schließbewegung ist auf den zylindrischen Schaft 31 ein Rohr 32 aufgeschoben, das in den Bereichen der Verjüngungen des zylindrischen Schafts 31 in diese Verjüngungen hinein verformt ist. Auf diese Art wird eine dauerhafte, formschlüssige Verbindung zwischen dem Kugelgelenkkopf 30 einerseits und dem Rohr 32 andererseits geschaffen.

Das Verschlussgehäuse 5 ist auf seiner offenen Seite mit einem Gehäusedeckel 6 mittels der Schrauben 35, die durch Bohrungen 36 des Gehäusedeckels 6 ragen, dicht verschlossen. In mittiger Lage ist eine untere Lagerbuchse 25 in eine untere Lageraufnahme 27 des Gehäusedeckels 6 eingebaut. Weiter ragen von dem Gehäusedeckel 6 seitliche Führungen 38 in das Verschlussgehäuse 5 hinein. Diese seitlichen Führungen 38 dienen zur Führung und Fixierung der beiden Flachschieber 10, 11 während des Öffnungs- oder Schließvorgangs der Verschlusseinheit 1. Die Führungen 38 können einstückig aus dem Gehäusedeckel 6 angeformt oder als separates Bauteil in entsprechende Aufnahmeöffnungen des Gehäusedeckels 6 eingebaut sein.

Wie in Figur 1 dargestellt sind bei der Montage der Verschlusseinheit 1 Stützbleche 37 in die Befestigungsöffnungen 8 des Verschlussgehäuses 5 eingeführt. Diese Stützbleche 37 sind dann notwendig, wenn das Verschlussgehäuse 5 beispielsweise aus Kunststoff gefertigt ist und dienen dazu, dass bei der Verschraubung des Verschlussgehäuses 5 die Wandungen der Befestigungsöffnungen 8 nicht verformt bzw. beschädigt werden. Weiter wird durch die Dimensionierung der Stützbleche 37 der Montageabstand der Befestigungen sowie definierte Anschraubkräfte ermöglicht.

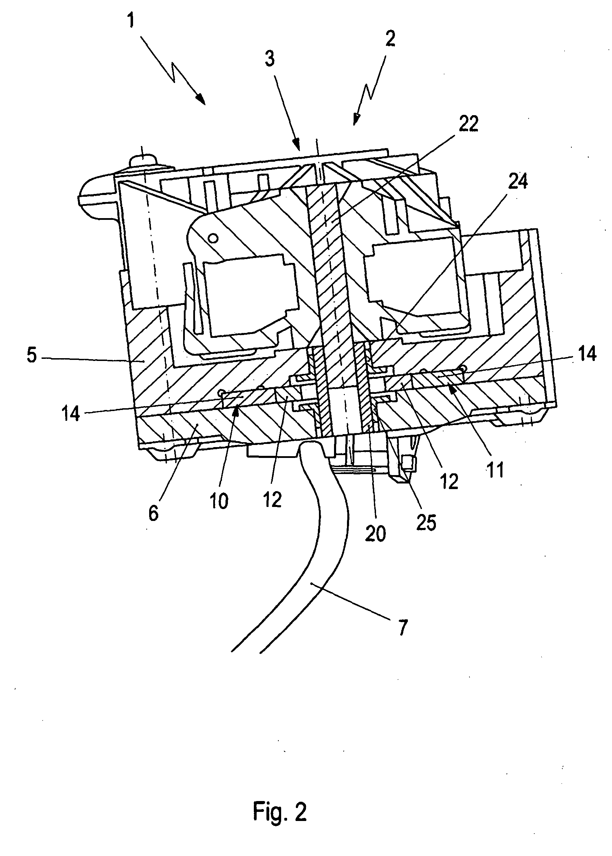

In Figur 2 ist ein Querschnitt durch die Antriebswelle 22 und durch das Ritzel 20 im zusammengebauten Zustand der Verschlusseinheit 1 abgebildet. Die Flachschieber 10, 11 sind zwischen dem Verschlussgehäuse 5 und dem Gehäusedeckel 6 montiert, wobei sich die Zahnstangen 13 der Flachschieber 10, 11 mit dem Ritzel 20 in Eingriff befinden. Das Ritzel 20 wird mit seiner oberen zylindrischen Verlängerung in der oberen Lagerbuchse 24 und mit seiner unteren zylindrischen Verlängerung in der unteren Lagerbuchse 25 geführt. Von der Seite der Antriebseinheit 2 ragt als Verbindungselement zwischen dem Ritzel 20 und der Antriebseinheit 2 eine Antriebswelle 22 bis in etwa mittige Lage in das Ritzel 20 hinein.

Der der Antriebswelle 22 gegenüberliegende freie Bereich des Innensechskants 21 des Ritzels 20 ist durch die Öffnung der unteren Lageraufnahme 27 mit dem Außenbereich verbunden. Durch diese Öffnung kann im Bedarfsfall eine Kurbel mit einem Außensechskant eingeführt werden und somit das Ritzel 20 und der gesamte Verschluss 1 durch Handbetrieb geöffnet bzw. geschlossen werden. Dies ist immer dann der Fall, wenn keine ausreichende Versorgungsspannung zum elektrischen Antrieb des Verschlusses 1 zur Verfügung steht. Diese Handbetätigung stellt somit eine Notver-/entriegelung bzw. eine handbetriebene Entriegelung dar.

Eine selbstständige Verstellung der Flachschieber ist nicht möglich, da die in der Antriebseinheit eingesetzten Zahnräder eine Selbsthemmung erzeugen können. Die Verschlusseinheit ist somit gesichert und kann nicht versehentlich, beispielsweise durch Vibrationen, geöffnet werden.

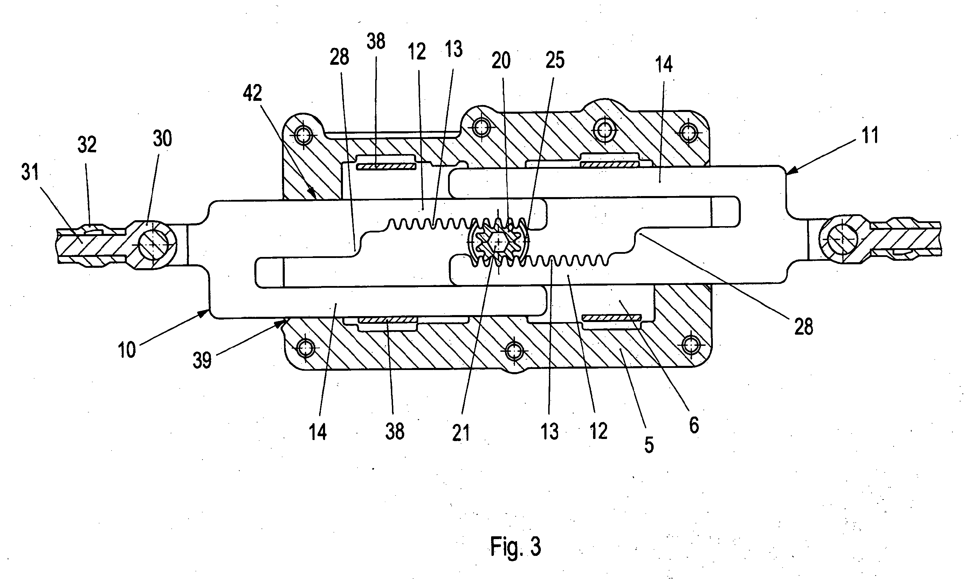

Figur 3 zeigt eine Ansicht auf die Flachschieber 10, 11 in ausgefahrener Schieberposition. In dieser Position ist der Verschluss 1 zwischen dem Dach und dem oberen Dachrahmen der Windschutzscheibe geschlossen/verriegelt. Zum Öffnen werden die Flachschieber 10, 11 durch Rotation des Ritzels 20 zusammengeschoben. Durch die Verschiebung werden an den gekröpften Haltern 16 gelenkig angebrachte Schub-/Zugstangen 32 bewegt, die an ihren der Verschlusseinheit 1 entgegengesetzten Seiten mit zur Verriegelung des Dachs notwendigen Verschlusselementen verbunden sind.

Die gekröpften Halter 16 sind an der Stegseite der U-förmigen Flachschieber 10, 11 zur Seite der Zahnstangen 13 versetzt angeordnet. In zusammengebauter Position befinden sich die gekröpften Halter 16 fluchtend in derselben Längsebene wie das Ritzel 20, so dass die Wirkung der Zug- bzw. Schubbewegung seitenkraftneutral in die Schub-/Zugstangen 32 eingeleitet werden können.

Die beiden U-förmigen Schenkel 12, 14 der Flachschieber 10, 11 weisen im Wesentlichen die gleiche Breite auf, wobei ein Schenkel 12 auf seiner dem gegenüberliegenden Schenkel 14 zugewandten Seite mit einer Verzahnung versehen ist. Dieser Schenkel 12 ist wenigstens teilweise als Zahnstange 13 ausgebildet, wobei die Länge der Verzahnung von der Verschiebebewegung der Schub-/Zugstangen 32 abhängig ist.
Beide U-förmigen, ineinandergreifenden Flachschieber 10, 11 sind mit einer Zahnstange 13 versehen, wobei die Schenkel 12 mit den Zahnstangen 13 im ständigen Zahneingriff mit dem Ritzel 20 sind. Die Rückseiten der Schenkel 12 liegen auf den jeweiligen Innenseiten der geraden Schenkel 14 des anderen U-förmigen Flachschiebers 10, 11. Durch diese Anordnung wird sicher und dauerhaft ein Abheben der Zahnstangen 13 vom Ritzel 20 verhindert. Ein jeder Schenkel 12 mit einer Zahnstange 13 ist somit zwischen dem Ritzel 20 und dem geraden Schenkel 14 des anderen Flachsschiebers 10, 11 eingespannt und geführt.
Das System dieser ineinandergreifenden U-förmigen Schenkel 12, 14 stellt kräftemäßig ein in sich geschlossenes System dar. Will auf einer Seite des Ritzels 20 eine Zahnstange 13 vom Ritzel 20 abheben, stützt sich die Zahnstange 13 rückseitig an der Innenseite des geraden Schenkels 14 des anderen Flachschiebers 10, 11 ab, der seinerseits wiederum über den Steg des U-förmigen Flachschiebers 10, 11 und über die Zahnstange 13 dieses Flachschiebers 10, 11 an dem Ritzel 20 abgestützt wird.
Beide Flachschieber 10, 11 sind identische Bauteile, die durch spiegelbildliche Montage die ineinander greifende und sich zueinander abstützende Verschlusseinheit 2 bilden.

In den Kontaktbereichen der Flachschieber 10, 11 zueinander (Rückseite der Zahnstange 13 und Innenseite des geraden Schenkels 14) werden die Schenkel 12, 14 der U-förmigen Flachschieber 10, 11 nicht nur abgestützt, sondern auch miteinander geführt. Für die Flachschieber 10, 11 sind weitere Führungen in den Durchtrittsbereichen der Gehäuseöffnungen 39 sowie in mittiger Lage des Verschlussgehäuses 5 im Bereich des Ritzels 20 vorgesehen. Diese Führungen sind mit ihren Ausdehnungen so dimensioniert, dass ein seitliches Kippen der Flachschieber 10, 11 sicher verhindert wird. Zusätzlich sind in den Bereichen zwischen den mittigen Führungen und den Führungen in den Gehäuseöffnungen 39 seitliche Führungen 38 für die Flachschieber 10, 11 auf der Innenseite des Gehäusedeckels 6 angebracht. Diese seitlichen Führungen dienen unter anderem dazu, dass bei der Montage die Flachschieber 10, 11 zueinander positioniert und an dem Gehäusedeckel 6 gehalten werden können. Diese seitlichen Führungen 38 ragen als schmale Stege vom Gehäusedeckel 6 hervor und können über entsprechende Neigungen in Richtung der Flachschieber 10, 11 ähnlich einer Blattfeder Querkräfte auf diese ausüben. Weiter spannen diese Querkräfte die Flachschieber 10, 11 zueinander vor, womit mögliche Klappergeräusche vermieden und Toleranzen der Schieber 10, 11, des Ritzels 20 und/oder des Gehäuses 5 ausgeglichen werden können.

Die Enden der Zahnstangen 13 sind als kurzer und flacher Bereich entsprechend der Breite der Zahnstange 13 ausgeführt. Im Bereich nahe den Stegen der U-förmigen Flachschieber 10, 11 ist die U-förmige Aussparung zwischen den Schenkeln 12, 14 der Breite der Zahnstangen 13 angepasst. Bei nahezu vollständig zusammengeschobenen Flachschiebern 10, 11 werden die Enden der Flachschieber 10, 11 in diesen U-förmigen Aussparungen aufgenommen und die Flachschieber 10, 11 somit zusätzlich zueinander geführt und abgestützt. Bei vollständig zusammengeschobenen Flachschiebern 10, 11 kann das Ende des Schenkels 12 mit der Zahnstange 13 an den Steg des gegenüberliegenden U-förmigen Flachschiebers 10, 11 stoßen, womit zwischen beiden Schiebern 10, 11 somit ein Anschlag gebildet wird.

In dem Ausführungsbeispiel in Figur 3 dargestellt ist der Schenkel 12 mit der Zahnstange 13 auf der dem eigenen Steg zugewandten Seite in etwa mittiger Lage verbreitert ausgeführt. Diese Verbreiterung ist stufenförmig ausgebildet und in den Übergangsbereichen 28 mit Radien versehen. Die geometrische Formgebung des stufenförmigen Übergangsbereichs 28 kann so gestaltet sein, dass bei zusammengeschobenen Flachschiebern 10, 11 die stufenförmigen Übergangsbereiche 28 als Anschläge an dem Ritzel 20 zum Anliegen kommen. Hierbei kann der Übergangsbereich 28 der zylindrischen Form des Ritzels 20 angepasst sein.

### Bezugszeichenliste

- 1: Verschlusseinheit, Verschlusssystem
- 2: Antriebseinheit
- 3: Getriebe
- 4: el. Antrieb, el. Motor
- 5: Verschlussgehäuse
- 6: Gehäusedeckel
- 7: el. Anschluss, el. Leitungen
- 8: Befestigungsöffnung, Langloch

- 10: linker Flachschieber mit Zahnstange
- 11: rechter Flachschieber mit Zahnstange
- 12: Schenkel mit Zahnstange
- 13: Zahnstange
- 14: gerader Schenkel
- 15: Kugelgelenkbolzen
- 16: gekröpfter Halter
- 17: Bohrung

- 20: Ritzel
- 21: Innensechskant
- 22: Antriebswelle
- 23: Außensechskant
- 24: obere Lagerbuchse
- 25: untere Lagerbuchse
- 26: obere Lageraufnahme
- 27: untere Lageraufnahme
- 28: stufenförmiger Übergangsbereich

- 30: Kugelgelenkkopf
- 31: zylindrischer Schaft
- 32: Rohr, Schub-/Zugstange

- 35: Schraube
- 36: Bohrung
- 37: Stützblech
- 38: seitliche Führung
- 39: Gehäuseöffnung für Flachschieber
- 40: Fixierstift
- 41: Bohrung
- 42: Gleitführung für Flachschieber

## Patentansprüche

1. Verschlusssystem für ein Fahrzeug, vorzugsweise für Kraftfahrzeuge, bei dem durch einen in einem Verschlussgehäuse (5) aufgenommenen el. Motor (4) und ein Getriebe (3) über eine Antriebswelle (22) ein Ritzel (20) angetrieben wird und wenigstens ein mit einer Verzahnung versehener Schieber (10,11), über das Ritzel (20) in Längsrichtung des Schiebers (10,11) verschoben wird, wobei der wenigstens eine Schieber (10,11) als Flachschieber (10,11) ausgebildet ist, **dadurch gekennzeichnet, dass** zwei U-förmig ausgebildete Flachschieber (10,11) vorgesehen sind, und dass je ein Schenkel der U-förmigen Flachschieber (10,11) mit seiner Innenseite auf der Außenseite des anderen Schenkels (12) des anderen Flachschiebers (10,11) gleitend geführt wird.

2. Verschlusssystem für Fahrzeuge nach Anspruch 1,
**dadurch gekennzeichnet, dass** ein Schenkel (12) des U-förmigen Flachschiebers (10, 11) auf seiner dem Innenraum zugewandten Seite eine Verzahnung in Form einer Zahnstange (13) aufweist.

3. Verschlusssystem für Fahrzeuge nach Anspruch 1 und 2,
**dadurch gekennzeichnet, dass** der dem als Zahnstange (13) ausgebildeten Schenkel (12) gegenüber angeordnete Schenkel (14) über seine gesamte Länge die gleiche Breite aufweist.

4. Verschlusssystem für Fahrzeuge nach Anspruch 1 bis 3,
**dadurch gekennzeichnet, dass** der als Zahnstange (13) ausgebildete Schenkel (12) in in etwa mittiger Lage eine bis zum Steg des U-förmigen Flachschiebers (10, 11) verlaufende Verbreiterung aufweist.

5. Verschlusssystem für Fahrzeuge nach Anspruch 1 bis 4,
**dadurch gekennzeichnet, dass** der Innenraum zwischen dem Schenkel (14) und dem verbreiterten Bereich des Schenkels (12) die Breite des Schenkels (14) besitzt.

6. Verschlusssystem für Fahrzeuge nach Anspruch 1, 4 und 5,
**dadurch gekennzeichnet, dass** der Übergangsbereich (28) des als Zahnstange (13) ausgebildeten Schenkels (12) zum verbreiterten Bereich des Schenkels (12) stufenförmig ausgebildet ist.

7. Verschlusssystem für Fahrzeuge nach Anspruch 1 bis 6,
**dadurch gekennzeichnet, dass** der stufenförmige Übergangsbereich (28) bei zusammengefahrenen Flachschiebern (10, 11) als Anschlag zwischen dem Flachschieber (10, 11) und dem Ritzel (20) dient.

8. Verschlusssystem für Fahrzeuge nach einem oder mehreren der vorangehenden Ansprüche,
**dadurch gekennzeichnet, dass** der Steg des U-förmigen Flachschiebers (10, 11) als Anschlag für den als Zahnstange (13) ausgebildeten Schenkel (12) dient.

9. Verschlusssystem für Fahrzeuge nach Anspruch 1,
**dadurch gekennzeichnet, dass** der Flachschieber (10, 11) an seiner den U-förmigen Schenkeln (12, 14) gegenüberliegenden Seite einen Halter (16) aufweist und dass der Halter (16) stufenförmig ausgebildet ist.

10. Verschlusssystem für Fahrzeuge nach Anspruch 1 und 9,
**dadurch gekennzeichnet, dass** an dem freien Ende des stufenförmigen Halters (16) ein Kugelgelenkbolzen (15) angebracht ist.

11. Verschlusssystem für Fahrzeuge nach Anspruch 1,
**dadurch gekennzeichnet, dass** der Flachschieber (10, 11) in einer Gehäuseöffnung (39) und in etwa mittiger Lage des Verschlussgehäuses (5) geführt wird.

12. Verschlusssystem für Fahrzeuge nach Anspruch 1 und 11, **dadurch gekennzeichnet, dass** der Flachschieber (10,11) mit der Rückseite des Schenkels (14) zusätzlich durch flache seitliche Führungen (38) geführt wird und dass die seitlichen Führungen (38) einen auf den Schenkel (14) gerichteten Druck ausüben.

13. Verschlusssystem für Fahrzeuge nach Anspruch 12,
**dadurch gekennzeichnet, dass** die seitlichen Führungen (38) in Öffnungen des Gehäusedeckels (6) aufgenommen sind.

14. Verschlusssystem für Fahrzeuge nach Anspruch 12,
**dadurch gekennzeichnet, dass** die seitlichen Führungen (38) einstückig mit dem Gehäusedeckel (6) verbunden sind.

15. Verschlusssystem für Fahrzeuge nach Anspruch 2,
**dadurch gekennzeichnet, dass** die Zahnstangen (13) der Schenkel (12) in ständigen Eingriff mit dem Ritzel (20) kämmen.

16. Verschlusssystem für Fahrzeuge nach Anspruch 1,
**dadurch gekennzeichnet, dass** das Ritzel (20) mit einem von außen zugänglichen Innensechskant (21) versehen ist.

17. Verschlusssystem für Fahrzeuge nach Anspruch 1,
**dadurch gekennzeichnet, dass** im montierten Zustand das Ritzel (20) mit axialen Verlängerungen in Lagerbuchsen (24, 25) drehbar gelagert ist.

## Claims

1. Locking system for a vehicle, preferably for motor vehicles, in which a pinion (20) is driven, via a driveshaft (22), by an electric motor (4) received in a lock housing (5) and a transmission (3), and at least one slider (10, 11) provided with a set of teeth is moved in the longitudinal direction of the slider (10, 11) by means of the pinion (20), the at least one slider (10, 11) being designed as a rack and pinion gate (10, 11), **characterised in that** two U-shaped rack and pinion gates (10, 11) are provided, and **in that** the inner side of each leg of the U-shaped rack and pinion gates (10, 11) is guided so as to slide across the outer side of the other leg (12) of the other rack and pinion gate (10, 11).

2. Locking system for vehicles according to claim 1,
**characterised in that** a leg (12) of the U-shaped rack and pinion gate (10, 11) has a set of teeth in the form of a rack (13) on the side thereof facing the inner space.

3. Locking system for vehicles according to claims 1 and 2,
**characterised in that** the leg (14) arranged opposite the leg (12) formed as a rack (13) is the same width along the entire length thereof.

4. Locking system for vehicles according to claims 1 to 3,
**characterised in that** the leg (12) formed as a rack (13) has a wider portion which extends in an approximately central position up to the web of the U-shaped rack and pinion gate (10, 11).

5. Locking system for vehicles according to claims 1 to 4,
**characterised in that** the inner space between the leg (14) and the widened region of the leg (12) is the width of the leg (14).

6. Locking system for vehicles according to claims 1, 4 and 5,
**characterised in that** the transition region (28) of the leg (12) formed as a rack (13) into the widened region of the leg (12) is stepped.

7. Locking system for vehicles according to claims 1 to 6,
**characterised in that** the stepped transition region (28) serves as a stop between the rack and pinion gate (10, 11) and the pinion (20) when the rack and pinion gates (10, 11) are moved together.

8. Locking system for vehicles according to one or more of the preceding claims,
**characterised in that** the web of the U-shaped rack and pinion gate (10, 11) serves as a stop for the leg (12) formed as a rack (13).

9. Locking system for vehicles according to claim 1,
**characterised in that** the rack and pinion gate (10, 11) comprises a retaining means (16) on the side thereof opposite the U-shaped legs (12, 14), and **in that** the retaining means (16) is stepped.

10. Locking system for vehicles according to claims 1 and 9,
**characterised in that** a ball joint bolt (15) is attached to the free end of the stepped retaining means (16).

11. Locking system for vehicles according to claim 1, **characterised in that** the rack and pinion gate (10, 11) is guided in a housing opening (39) and approximately in a central position of the lock housing (5).

12. Locking system for vehicles according to claims 1 and 11, **characterised in that**, in addition, the rear side of the leg (14) of the rack and pinion gate (10, 11) is guided by flat lateral guides (38), and **in that** the lateral guides (38) exert a pressure on the leg (14).

13. Locking system for vehicles according to claim 12, **characterised in that** the lateral guides (38) are received in openings in the housing cover (6).

14. Locking system for vehicles according to claim 12,
**characterised in that** the lateral guides (38) are integrally connected to the housing cover (6).

15. Locking system for vehicles according to claim 2,
**characterised in that** the racks (13) of the legs (12) are constantly engaged with the pinion (20) by means of meshing.

16. Locking system for vehicles according to claim 1,
**characterised in that** the pinion (20) is provided with a hexagon socket (21) which is accessible from the outside.

17. Locking system for vehicles according to claim 1,
**characterised in that**, when assembled, the axial extensions of the pinion (20) are rotatably mounted in bearing bushes (24, 25).

## Revendications

1. Système de fermeture pour un véhicule, de préférence pour véhicules automobiles, dans lequel un pignon (20) est entraîné par un moteur électrique (4) confiné dans un boîtier de fermeture (5) et un mécanisme (3) via un arbre d'entraînement (22) et au moins un curseur (10, 11) pourvu d'une denture est déplacé via le pignon (20) dans la direction longitudinale du curseur (10, 11), dans lequel le au moins un curseur (10, 11) se présente sous la forme d'un curseur plat (10, 11), **caractérisé en ce qu'**il est prévu deux curseurs plats en forme de U et respectivement une branche des curseurs en forme de U (10, 11) est guidée à coulissement par son côté intérieur sur le côté extérieur de l'autre branche (12) de l'autre curseur plat (10, 11).

2. Système de fermeture pour véhicules selon la revendication 1,
**caractérisé en ce qu'**une branche (12) du curseur plat en forme de U (10, 11) présente sur son côté tourné vers l'espace intérieur une denture sous la forme d'une crémaillère (13).

3. Système de fermeture pour véhicules selon les revendications 1 et 2,
**caractérisé en ce que** la branche (14) aménagée en regard de la branche (12) conformée en crémaillère (13) présente la même largeur sur toute sa longueur.

4. Système de fermeture pour véhicules selon les revendications 1 à 3,
**caractérisé en ce que** la branche (12) conformée en crémaillère (13) présente en position plus ou moins centrale un élargissement s'étendant jusqu'à la barrette du curseur plat en forme de U (10, 11).

5. Système de fermeture pour véhicules selon les revendications 1 à 4,
**caractérisé en ce que** l'espace interne entre la branche (14) et la zone élargie de la branche (12) a la largeur de la branche (14).

6. Système de fermeture pour véhicules selon les revendications 1, 4 et 5,
**caractérisé en ce que** la zone de transition (28) de la branche (12) conformée en crémaillère (13) avec la zone élargie de la branche (12) est conformée en forme de gradin.

7. Système de fermeture pour véhicules selon les revendications 1 à 6,
**caractérisé en ce que** la zone de transition en forme de gradin (28) dans les curseurs plats déplacés conjointement (10, 11) sert de butée entre le curseur plat (10, 11) et le pignon (20).

8. Système de fermeture pour véhicules selon une ou
plusieurs des revendications précédentes, **caractérisé en ce que** la barrette du curseur en forme
de U (10, 11) sert de butée pour la branche (12) conformée en crémaillère (13).

9. Système de fermeture pour véhicules selon la revendication 1,
**caractérisé en ce que** le curseur plat (10, 11) présente sur son côté opposé aux branches en forme de U (12, 14) un support (16) et le support (16) est conformé en gradin.

10. Système de fermeture pour véhicules selon les revendications 1 et 9,
**caractérisé en ce qu'**un boulon d'articulation à rotule (15) est disposé sur l'extrémité libre du support en forme de gradin (16).

11. Système de fermeture pour véhicules selon la revendication 1,
**caractérisé en ce que** le curseur plat (10, 11) est guidé dans une ouverture (39) du boîtier à peu près en position centrale du boîtier de fermeture (5).

12. Système de fermeture pour véhicules selon les revendications 1 et 11,
**caractérisé en ce que** le curseur plat (10, 11) est guidé en outre, avec la face arrière de la branche (14), par des guides latéraux plats (38) et les guides latéraux (38) exercent une pression sur la branche (14).

13. Système de fermeture pour véhicules selon la revendication 12,
**caractérisé en ce que** les guides latéraux (38) sont reçus dans des ouvertures du couvercle (6) du boîtier.

14. Système de fermeture pour véhicules selon la revendication 12,
**caractérisé en ce que** les guides latéraux (38) sont reliés d'une pièce au couvercle (6) du boîtier.

15. Système de fermeture pour véhicules selon la revendication 2,
**caractérisé en ce que** les crémaillères (13) des branches (12) s'engagent en prise permanente avec le pignon (20).

16. Système de fermeture pour véhicules selon la revendication 1,
**caractérisé en ce que** le pignon (20) est pourvu d'une denture de six pans creux (21) accessible de l'extérieur.

17. Système de fermeture pour véhicules selon la revendication 1,
**caractérisé en ce que**, à l'état monté, le pignon (20) est monté à rotation avec des prolongements axiaux dans des coussinets (24, 25).
